# EUROPÄISCHE PATENTANMELDUNG

(11) **EP 0 794 373 A1**
(43) Veröffentlichungstag der Anmeldung: **10.09.1997**
(21) Anmeldenummer: 97103205.7
(22) Anmeldetag: 27.02.1997
(51) Int. Cl.: F16K 37/00

(54) **Verfahren und Vorrichtung zur Bestimmung des Ansprechpunktes eines Sicherheitsventils**

(30) Priorität: 09.03.1996 DE 19609182
(71) Anmelder: Bopp & Reuther Sicherheits- und Regelarmaturen GmbH, 68305 Mannheim (DE)
(72) Erfinder: Schnettler, Armin, Dr.-Ing., 41517 Grevenbroich (DE)
(74) Vertreter: Lasch, Hartmut Dipl.-Ing.

(57) **Zusammenfassung**

Bei einem Verfahren zur Bestimmung eines Ansprechpunktes eines Sicherheitsventils, dessen Ventilelement (17) unter der Vorspannung einer Feder (31) an einem Ventilsitz (16) anliegt, wird auf das Ventilelement mittels eines Kraftübertragungselementes (28), das mit dem Ventilelement in Anlage gebracht wird, eine der Federvorspannung entgegenwirkende Abhebekraft aufgebracht. Die Abhebekraft wird soweit gesteigert, bis das Ventilelement von dem Ventilsitz abgehoben wird. Sowohl die aufgebrachte Abhebekraft als auch der daraus resultierende Hub des Ventilelementes werden erfaßt und ausgewertet, wobei sich der Ansprechpunkt als Unstetigkeitsstelle in einem Kraft-Weg-Diagramm darstellen läßt. Eine Vorrichtung zur Durchführung des Verfahrens weist einen mit dem Ventilelement in Anlage bringbaren Krafterzeuger (25), mittels dessen auf das Ventilelement eine der Federvorspannung entgegenwirkende Abhebekraft aufbringbar ist, eine Kraft-Erfassungsvorrichtung (26) und eine Weg-Erfassungsvorrichtung (30) auf.

## Beschreibung

Die Erfindung betrifft ein Verfahren zur Bestimmung des Ansprechpunktes eines Sicherheitsventils, dessen Ventilelement unter der Vorspannung einer Feder an einem Ventilsitz anliegt. Darüber hinaus betrifft die Erfindung eine Vorrichtung zur Durchführung des Verfahrens.

Sicherheitsventile sind in unter Fluiddruck stehenden Leitungssystemen von chemischen oder petrochemischen Anlagen sowie in Kraftwerken, insbesondere Kernkraftwerken, und Raffinerien wichtige Komponenten zur Absicherung gegen unzulässige Drucküberschreitungen. Sie besitzen üblicherweise ein Ventilgehäuse mit einem Einlaßkanal und einem Auslaßkanal, zwischen denen ein Ventilsitz ausgebildet ist, auf dem ein Ventilelement dichtend aufsitzt. Das Ventilelement ist mittels einer Feder gegen bzw. auf den Ventilsitz gespannt, so daß ein im Eingangskanal wirksamer Fluiddruck zum Öffnen des Ventiles die Federkraft übersteigen muß. Da das Sicherheitsventil bei einem vorbestimmten Druck zuverlässig öffen soll, ist es wichtig, den Druckwert möglichst genau zu kennen, bei dem das Ventilelement von dem Ventilsitz tatsächlich abhebt. Dieser sogenannte Ansprechpunkt kann auf verschiedene Weise definiert werden. Üblicherweise wird davon ausgegangen, daß der Ansprechpunkt durch den sogenannten ersten meßbaren Hub des Ventilelementes definiert ist, der sich jedoch nur schwierig genau bestimmen läßt. Zur Bestimmung des Ansprechpunktes eines Sicherheitsventils wird deshalb zur Zeit die rein subjektive Wahrnehmung einer Bedienperson zu Hilfe genommen. Wenn das Sicherheitsventil für die Verwendung in einer Gasleitung vorgesehen ist, wird zu Testzwecken auf der Eingangsseite ein Gasdruck, üblicherweise Luftdruck, angelegt, der solange erhöht wird, bis eine Bedienperson meint, ein Zischgeräusch zu hören, das sich einstellt, wenn das Ventilelement geringfügig von dem Ventilsitz abgehoben hat. Der Ansprechpunkt ergibt dabei somit alleine aus der subjektiven Wahrnehmung einer Bedienperson, so daß die Genauigkeit einer derartigen Bestimmung des Ansprechdruckes äußerst gering ist. Darüber hinaus ist eine derartige Bestimmung des Ansprechpunktes nicht reproduzierbar.

Gleichartige Probleme treten bei der Bestimmung des Ansprechpunktes eines Sicherheitsventils auf, das für die Verwendung in einer Flüssigkeitsleitung vorgesehen ist. Dabei wird auf der Eingangsseite ein Flüssigkeitsdruck, insbesondere ein Wasserdruck, angelegt und solange erhöht, bis auf der Ausgangsseite eine nennenswerte Menge an Flüssigkeit austritt. Dabei ist jedoch nicht eindeutig festgelegt, ob der Ansprechpunkt bereits erreicht ist, sobald auf der Ausgangsseite die ersten Wassertropfen austreten, oder ob der Ansprechpunkt erst dann erreicht ist, wenn ein kontinuierlicher Wasserstrahl austritt. Somit ist auch hierbei die Bestimmung des Ansprechpunktes von der subjektiven Leckagebeobachtung der Bedienperson abhängig, was fehleranfällig und ebenfalls nicht reproduzierbar ist.

Der Erfindung liegt die Aufgabe zugrunde, ein Verfahren zu schaffen, mit dem der Ansprechpunkt eines Sicherheitsventils in reproduzierbarer Weise zuverlässig bestimmbar ist, sowie eine Vorrichtung vorzusehen, mit der das Verfahren einfach und schnell durchgeführt werden kann.

Hinsichtlich des Verfahrens wird diese Aufgabe dadurch gelöst, daß auf das Ventilelement mittels eines Kraftübertragungselementes, das mit dem Ventilelement in Anlage gebracht wird, eine der Federvorspannung entgegenwirkende Abhebekraft aufgebracht und bis zum Abheben des Ventilelementes von dem Ventilsitz gesteigert wird, wobei sowohl die aufgebrachte Abhebekraft als auch der daraus resultierende Hub des Ventilelementes erfaßt werden.

Bei dem erfindungsgemäßen Verfahren wird somit auf der Eingangsseite kein Fluiddruck aufgebracht, sondern das Ventilelement wird direkt durch Anlage eines kraftübertragenden Bauteils, beispielsweise eines Kolbens eines Hydraulikzylinders beaufschlagt, bis es deutlich von dem Ventilsitz abgehoben ist. Da sowohl die Abhebekraft als auch die daraus resultierende Bewegung des Ventilelementes erfaßt und vorzugsweise gespeichert werden, läßt sich aus deren Verläufen der Ansprechpunkt mit hoher Genauigkeit bestimmen, da im Ansprechpunkt eine Unstetigkeit bzw. ein deutlicher Knickpunkt in den den Verläufen entsprechenden Kurven einstellt.

Es hat sich als vorteilhaft erwiesen, die Belastungs- und Bewegungsgeschichte, d.h. den Verlauf der aufgebrachten Abhebekraft über die Zeit und den Verlauf des Hubs über die Zeit zu erfassen und abzuspeichern. Eine eindeutige Bestimmung des Ansprechpunktes läßt sich erreichen, wenn aus diesen beiden erfaßten Verläufen ein Kraft-Weg-Verlauf ermittelt wird, der eine Kennlinie des getesteten Sicherheitsventils darstellt.

Es hat sich in praktischen Versuchen gezeigt, daß sich für verschiedene Typen von Sicherheitsventilen der Ansprechpunkt mit hoher Genauigkeit und sehr guter Reproduzierbarkeit ermitteln läßt. Des weiteren kann bei dem erfindungsgemäßen Verfahren die Gängigkeit der Ventile getestet werden, ohne daß ein Druckfluid aufgebracht werden muß. Aus dem Kraft-Weg-Verlauf läßt sich des weiteren die Federkonstante der im Sicherheitsventil eingebauten Feder in einfacher Weise feststellen und überprüfen, so daß die irrtümliche Verwendung eines nicht vorgesehenen Federelementes ausgeschlossen werden kann.

Ein weiterer Vorteil des erfindungsgemäßen Verfahrens ergibt sich bei der Überprüfung von Sicherheitsventilen, die bereits seit einiger Zeit in Betrieb sind. Bei derartigen Sicherheitsventilen kann es passieren, daß das Ventilelement auf dem Ventilsitz festklebt oder anhaftet. Bei der bisher üblichen Aufbringung eines Fluiddrucks auf der Eingangsseite des Sicherheitsventils war somit ein übermäßig hoher Fluiddruck notwendig, um das Ventilelement vom Ventilsitz zu lösen. Dabei könnte es zu Unfällen kommen, wenn das Sicherheitsventil aufgrund des hohen Fluiddrucks beschädigt oder zerstört wurde. Mit den erfindungsgemäßen Verfahren ist diese Gefahr beseitigt, da die Abhebekraft direkt auf das Ventilelement einwirkt und das Ventilgehäuse nicht belastet.

In bevorzugter Ausgestaltung des erfindungsgemäßen Verfahrens ist vorgesehen, daß die Abhebekraft solange gesteigert wird, bis das Ventilelement die Position seines maximalen Hubs erreicht. In diesem Zustand liegt das Ventilelement üblicherweise an einem Anschlag an, so daß die Abhebekraft erhöht werden kann, ohne daß es zu einer weiteren Verschiebung des Ventilelementes kommt. Auch das Erreichen des maximalen Hubs des Ventilelementes ist in dem Kraft- Weg-Verlauf als Unstetigkeit erkennbar, so daß der maximale Hub des Ventilelementes in einfacher Weise bestimmt werden kann.

Zur Aufbringung der Abhebekraft auf das Ventilelement hat sich die Verwendung eines Hydraulikzylinders bewährt. Der Kolben des Hydraulikzylinders ist dabei vorzugsweise mit einem Stößel verbunden, der mit dem Ventilelement durch den Einlaßkanal des Sicherheitsventils hindurch in Anlage gebracht wird. Die am Kolben des Hydraulikzylinders wirksame Kraft wird über den Stößel direkt auf das Ventilelement übertragen, wobei am Hydraulikzylinder oder am Stößel die jeweils aufgebrachte Kraft erfaßt werden kann.

Das Ventilelement des Sicherheitsventils ist üblicherweise mit einer Spindel verbunden oder einstückig mit dieser ausgestaltet, die das Ventilgehäuse in fluiddichter Weise durchdringt und zum manuellen Öffnen des Ventils vorgesehen ist. Um die Hubbewegung des Ventilelementes in einfacher Weise erfassen zu können, ist erfindungsgemäß vorgesehen, daß die Verschiebung bzw. die Bewegung der mit dem Ventilelement gekoppelten Spindel erfaßt wird.

Hinsichtlich der Vorrichtung wird die oben genannte Aufgabe durch einen mit dem Ventilelement in Anlage bringbaren Krafterzeuger gelöst, mittels dessen auf das Ventilelement eine der Federvorspannung entgegenwirkende Abhebekraft aufbringbar ist. Des weiteren sind eine Kraft-Erfassungsvorrichtung, mittels der der Verlauf der aufgebrachten Abhebekraft erfaßt werden kann, und eine Weg-Erfassungsvorrichtung vorgesehen, mittels der der Verlauf des Hubes des Ventilelementes erfaßt wird. Zur Aufbringung der Abhebekraft findet dabei vorzugsweise ein Hydraulikzylinder Verwendung, dessen Kolben unmittelbar oder mittelbar unter Zwischenschaltung von weiteren Bauteilen auf das Ventilelement einwirkt.

In bevorzugter Ausgestaltung der Erfindung ist vorgesehen, daß dem Kolben des Hydraulikzylinders ein Stößel zugeordnet ist, der auf das Ventilelement einwirkt und daß zwischen dem Kolben und dem Stößel die Kraft-Erfassungsvorrichtung angeordnet ist, wobei es sich vorzugsweise um eine Kraftmeßdose handelt.

Der Hub des Ventilelementes wird durch die Weg-Erfassungsvorrichtung erfaßt, wobei es sich insbesondere um einen induktiven oder optischen Wegaufnehmer handeln kann.

Eine konstruktiv einfache Anbringung der Weg-Erfassungsvorrichtung ist gewährleistet, wenn diese am Kopf der das Ventilgehäuse des Sicherheitsventils durchdringenden Spindel außerhalb des Gehäuses angeordnet ist.

Die mittels der Kraft- und Weg-Erfassungsvorrichtung ermittelten Verläufe der Kraft bzw. des Hubes über die Zeit werden vorzugsweise einer Rechnereinheit zugeführt, in der daraus ein Kraft-Weg-Diagramm errechnet und gegebenenfalls graphisch dargestellt wird.

Weitere Einzelheiten und Merkmale der Erfindung sind aus der folgenden Beschreibung eines Ausführungsbeispiels unter Bezugnahme auf die Zeichnung ersichtlich. Es zeigen:
- Figur 1: einen Versuchsaufbau zur Bestimmung des Ansprechpunktes eines Sicherheitsventils und
- Figur 2: ein typisches Kraft-Weg-Diagramm.

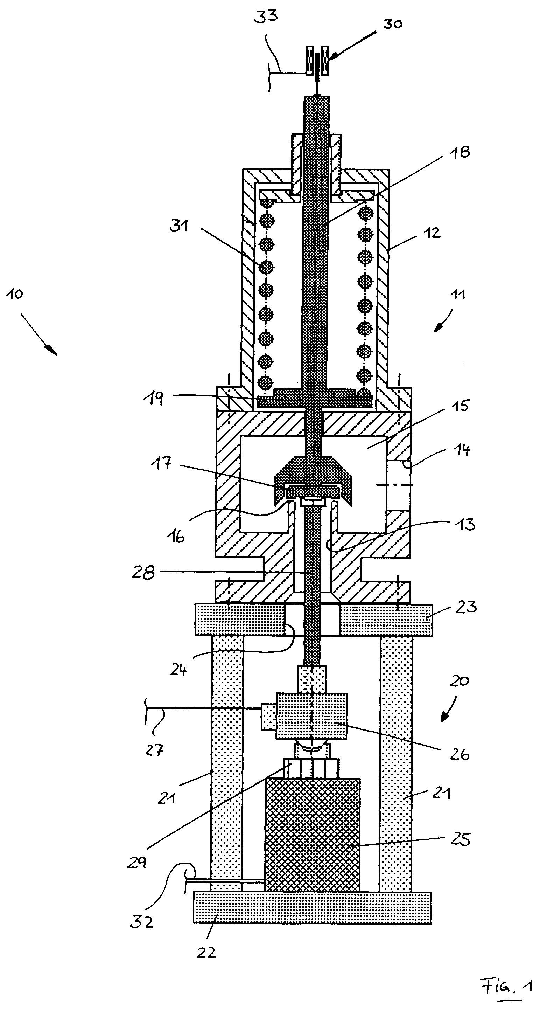

Figur 1 zeigt den Versuchsaufbau 10 zur Bestimmung des Ansprechpunktes eines Sicherheitsventils 11. Zu diesem Zweck ist ein Prüftisch 20 vorgesehen, der aus einer unteren horizontalen Platte 22 und einer oberen horizontalen Platte 23 besteht, die über Stützen oder Bolzen 21 auf Abstand gehalten sind. Auf der unteren Platte 22 ist ein Hydraulikzylinder 25 montiert, der über eine Leitung 32 mit einer nicht dargestellten Druckquelle in Verbindung steht. Ein von dem Hydraulikzylinder 25 nach oben ausfahrbarer Kolben 29 ist an seinem oberen Ende mit einer Kraftmeßdose 26 versehen, die über eine Leitung 27 an eine nicht dargestellte Auswerteeinrichtung angeschlossen ist. Auf der dem Kolben 29 abgewandten Seite ist an der Kraftmeßdose 26 ein Stößel 28 befestigt, der die obere horizontale Platte 23 an einer Durchgangsbohrung 24 durchdringt. Der Kolben 29, die Kraftmeßdose 26 und der Stößel 28 können bei Betätigung des Hydraulikzylinders 25 in vertikaler Richtung als Einheit auf- und abwärts verfahren werden.

Auf der Oberseite der oberen horizontalen Platte 23 ist ein zu prüfendes Sicherheitsventil 11 angebracht. Das Sicherheitsventil 11 besitzt ein Ventilgehäuse 12 mit einem inneren Fluidraum 15, der über einen Einlaßkanal 13 und einen Auslaßkanal 14 von außen zugänglich ist. Am inneren Ende des Einlaßkanals 13 ist ein Ventilsitz 16 ausgebildet.

In dem Ventilgehäuse 12 ist eine Spindel 18 verschieblich gelagert, die an ihrem oberen Ende das Ventilgehäuse 12 durchdringt und einstückig mit einem im wesentlichen senkrecht zu ihrer Längserstreckung verlaufenden Teller 19 versehen ist, an dem sich eine Spiralfeder 31 abstützt, die konzentrisch zur Spindel 18 angeordnet ist. Das andere Ende der Spiralfeder 31 ist an dem Ventilgehäuse 12 abgestützt.

Am unteren Ende der Spindel 18 ist nahe dem Ventilsitz 16 ein Ventilelement in Form eines sogenannten Ventilkegels 17 ausgebildet, der durch die Kraft der Spiralfeder 31 in fluiddichter Weise gegen den Ventilsitz 16 gedrückt wird.

Wie die Figur 1 zeigt, ist das Sicherheitsventil 11 derart auf der oberen Platte 23 des Prüftisches 20 angeordnet, daß der Stößel 28 in den Einlaßkanal 13 des Ventilgehäuses 12 hineinragt und mit dem Ventilkegel 17 in Anlage treten kann.

Am Kopf der Spindel 18, der außerhalb des Ventilgehäuses 12 liegt, ist ein Wegaufnehmer 30 angeordnet, der über eine Leitung 33 ebenfalls mit der Auswerteeinrichtung verbunden ist.

Wenn zur Bestimmung des Ansprechpunktes der Kolben 29 des Hydraulikzylinders 25 ausgefahren wird, kommt der Stößel 28 mit dem Ventilkegel 17 in Anlage und übt auf diesen eine der Kraft der Spiralfeder 31 entgegengerichtete Abhebekraft aus. Da zunächst die Vorspannung infolge der Spiralfeder 31 größer als die mittels des Stößels 28 ausgeübte Abhebekraft ist, verbleibt der Ventilkegel 17 auf dem Ventilsitz 16, so daß das Sicherheitsventil 11 sich weiterhin in der abdichtenden Stellung befindet. Wenn die Abhebekraft mittels des Hydraulikzylinders 25 weiter erhöht wird und die Vorspannung infolge der Spiralfeder 31 übersteigt, wird der Ventilkegel 17 mittels des Stößels 28 von dem Ventilsitz 16 abgehoben und entgegen der Kraft der Spiralfeder 31 verschoben, bis er die Position seines maximalen Hubs erreicht, in der er an einem von einer Gehäusewandung gebildeten Anschlag anliegt.

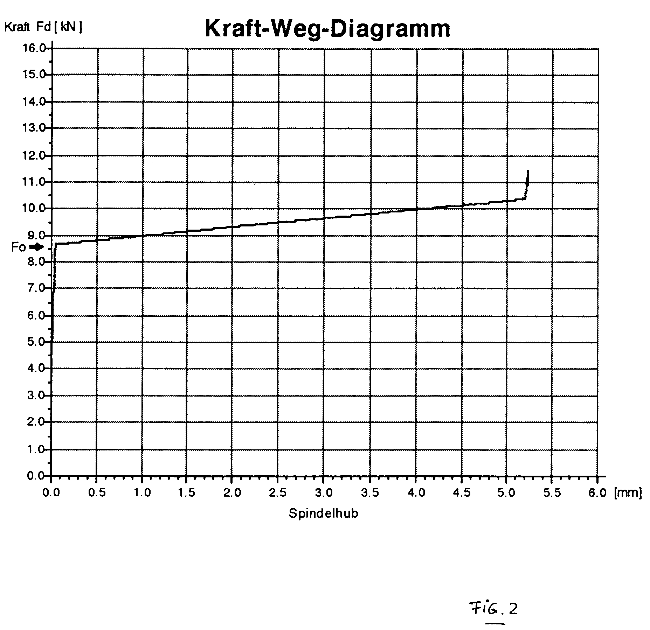

Während der kontinuierlichen Erhöhung der Abhebekraft wird sowohl der Verlauf der Abhebekraft über die Zeit mit Hilfe der Kraftmeßdose 26 als auch der Verlauf des Hubs des Ventilkegels 17 über die Zeit mit Hilfe des Wegaufnehmers 30 erfaßt und gespeichert. Aus diesen beiden Verläufen läßt sich ein Kraft-Weg-Diagramm erstellen, wie es in Figur 2 dargestellt ist. Auf der horizontalen Achse ist dabei der mittels des Wegaufnehmers 30 erfaßte Spindelhub in (mm) und auf der vertikalen Achse die mittels der Kraftmeßdose 26 erfaßte Abhebekraft in (kN) aufgetragen. Der sich bei einem typischen Versuch zur Bestimmung des Ansprechpunktes eines federbelasteten Sicherheitsventils ergebende Kraft-Weg-Verlauf ist in das Diagramm eingetragen. Es ist zunächst festzustellen, daß die Kraft zunächst steil ansteigt, während der Hub praktisch bei Null verbleibt. In diesem Bereich wird der Ventilkegel 17 infolge der Kraft der Spiralfeder 31 weiterhin auf dem Ventilsitz 16 gehalten, obwohl bereits eine Abhebekraft wirkt, die jedoch kleiner als die Vorspannung infolge der Spiralfeder 31 ist. Der in dem Diagramm gezeigte geringfügige Hub von weniger als 0,05 mm läßt sich damit erklären, daß der Ventilkegel 17 infolge Fertigungstoleranzen und eventueller geringer Schrägstellungen nicht in allen Punkten exakt gleichmäßig auf dem Ventilsitz 16 aufliegt, so daß er unmittelbar vor Erreichen des Ansprechpunktes bereits bereichsweise vom Ventilsitz 16 abgehoben ist, während er in anderen Bereichen noch an diesem anliegt.

Bei einer weiteren Erhöhung der Abhebekraft ist deutlich erkennbar, daß der Kraft-Weg-Verlauf einen starken Knick bzw. eine Unstetigkeitsstelle bei einer Kraft F₀ aufweist, während im weiteren Verlauf eine lineare Beziehung zwischen der Kraft und dem Hub gegeben ist, die der Federkonstante der Spiralfeder 31 entspricht. Die Unstetigkeitsstelle bzw. der zugeordnete Kraftwert F₀ entspricht dem Ansprechpunkt des Sicherheitsventils.

Bei einer weiteren Erhöhung der Abhebekraft gelangt der Ventilkegel 17 in die Position seines maximalen Hubes, in der er an einem Anschlag anliegt. Dies wird in der Kurve dadurch deutlich, daß der Hub trotz steigender Kraft nicht mehr ansteigt, so daß die aufgebrachte Abhebekraft durch innere Spannungen aufgenommen werden muß.

Es hat sich gezeigt, daß die Unstetigkeitsstelle im Kraft-Weg-Diagramm sich bei mehrmaligen Versuchen mit hoher Genauigkeit reproduzieren läßt, so daß der Ansprechpunkt eines zu prüfenden Sicherheitsventils mit hoher Genauigkeit bestimmt werden kann.

## Patentansprüche

1. Verfahren zur Bestimmung des Ansprechpunktes eines Sicherheitsventils, dessen Ventilelement (17) unter der Vorspannung einer Feder (31) an einem Ventilsitz (16) anliegt,
wobei auf das Ventilelement (17) mittels eines Kraftübertragungselementes (28), das mit dein Ventilelement (17) in Anlage gebracht wird, eine der Federvorspannung entgegenwirkende Abhebekraft aufgebracht und bis zum Abheben des Ventilelementes (17) von dem Ventilsitz (16) gesteigert wird und
wobei sowohl die aufgebrachte Abhebekraft als auch der daraus resultierende Hub des Ventilelementes (17) erfaßt werden.

2. Verfahren nach Anspruch 1, dadurch gekennzeichnet, daß der Verlauf der aufgebrachten Abhebekraft über der Zeit erfaßt wird.

3. Verfahren nach Anspruch 1 oder 2, dadurch gekennzeichnet, daß der Verlauf des Hubs des Ventilelementes (17) über der Zeit erfaßt wird.

4. Verfahren nach einem der Ansprüche 1 bis 3, dadurch gekennzeichnet, daß aus den erfaßten Verläufen der Abhebekraft und des Hubs ein Kraft-Weg-Verlauf ermittelt wird.

5. Verfahren nach einem der Ansprüche 1 bis 4, dadurch gekennzeichnet, daß die Abhebekraft solange gesteigert wird, bis das Ventilelement (17) die Position seines maximalen Hubs erreicht.

6. Verfahren nach einem der Ansprüche 1 bis 5, dadurch gekennzeichnet, daß das Kraftübertragungselement ein mit einem Hydraulikzylinder (25) verbundener Stößel (28) ist, der mit dem Ventilelement (17) durch einen Einlaßkanal (13) des Sicherheitsventils (11) hindurch in Anlage gebracht wird.

7. Verfahren nach einem der Ansprüche 1 bis 6, dadurch gekennzeichnet, daß das Ventilelement (17) mit einer Spindel (18) verbunden ist und daß zur Erfassung des Hubs des Ventilelementes (17) die Verschiebung der Spindel (18) erfaßt wird.

8. Vorrichtung zur Durchführung des Verfahrens nach einem der Ansprüche 1 bis 7, gekennzeichnet durch einen mit dem Ventilelement (17) in Anlage bringbaren Krafterzeuger (25), mittels dessen auf das Ventilelement (17) eine der Federvorspannung entgegenwirkende Abhebekraft aufbringbar ist,
eine Kraft-Erfassungsvorrichtung (26), mittels der der Verlauf der aufgebrachten Abhebekraft erfaßbar ist, und
eine Weg-Erfassungsvorrichtung (30), mittels der der Verlauf des Hubs des Ventilelementes (17) erfaßbar ist.

9. Vorrichtung nach Anspruch 8, dadurch gekennzeichnet, daß der Krafterzeuger ein Hydraulikzylinder (25) ist, dessen Kolben (29) mittelbar oder unmittelbar auf das Ventilelement (17) einwirkt.

10. Vorrichtung nach Anspruch 9, dadurch gekennzeichnet, daß dem Kolben (29) des Hydraulikzylinders (25) ein Stößel (28) zugeordnet ist, der auf das Ventilelement (17) einwirkt, und daß zwischen dem Kolben (29) und dem Stößel (28) die Kraft-Erfassungsvorrichtung (26) angeordnet ist.

11. Vorrichtung nach einem der Ansprüche 8 bis 10, dadurch gekennzeichnet, daß die Kraft-Erfassungsvorrichtung eine Kraftmeßdose (26) ist.

12. Vorrichtung nach einem der Ansprüche 8 bis 11, dadurch gekennzeichnet, daß die Weg-Erfassungsvorrichtung ein induktiver oder optischer Wegaufnehmer (30) ist.

13. Vorrichtung nach einem der Ansprüche 8 bis 12, wobei das Ventilelement (17) mit einer das Ventilgehäuse (12) des Sicherheitsventils (11) durchdringenden Spindel (18) verbunden ist, dadurch gekennzeichnet, daß die Weg-Erfassungsvorrichtung (30) am Kopf der Spindel (18) außerhalb des Ventilgehäuse (12) angeordnet ist.
